# EUROPÄISCHE PATENTSCHRIFT

(11) **EP 3 768 644 B1**
(45) Veröffentlichungstag und Bekanntmachung des Hinweises auf die Patenterteilung: **16.10.2024**
(21) Anmeldenummer: 19713375.4
(22) Anmeldetag: 13.03.2019
(51) Int. Cl.: C03B 23/023, C03B 23/00, C03B 23/025

(54) **VORRICHTUNG MIT EINEM OFEN UND VERFAHREN ZU DEREN VERWENDUNG**
DEVICE COMPRISING A FURNACE AND METHOD FOR THE USE THEREOF
DISPOSITIF ÉQUIPÉ D'UN FOUR ET PROCÉDÉ POUR SON UTILISATION

(30) Priorität: 23.03.2018 DE 102018204476
(43) Veröffentlichungstag der Anmeldung: 27.01.2021
(73) Patentinhaber: Fraunhofer-Gesellschaft zur Förderung der angewandten Forschung e.V., 80686 München (DE)
(72) Erfinder: GREMMELSPACHER, Matthias, 79108 Feiburg (DE); RIST, Tobias, 79108 Feiburg (DE); KÜBLER, Rainer, 79108 Feiburg (DE); LANG, Britta, 79108 Feiburg (DE)
(74) Vertreter: Friese Goeden Patentanwälte PartGmbB
(86) Internationale Anmeldenummer: PCT/EP2019/056237
(87) Internationale Veröffentlichungsnummer: WO 2019/179842

(56) Entgegenhaltungen:
- GB-A- 813 107
- US-A- 4 883 563
- ANONYMOUS: "Durchlaufofen - Wikipedia", 26 September 2016 (2016-09-26), pages 1 - 2, XP093025532, Retrieved from the Internet <URL:https://de.wikipedia.org/w/index.php?title=Durchlaufofen&oldid=158242784> [retrieved on 20230220]

## Beschreibung

Die Erfindung betrifft eine Vorrichtung mit einem Ofen mit zumindest einer von einer Wandung begrenzten Ofenkammer, in welche ein Glashalbzeug einbringbar ist. Weiterhin betrifft die Erfindung ein Verfahren zur Umformung von Glashalbzeugen.

Aus der Praxis ist bekannt, Glashalbzeuge in einen Ofen einzuführen, dort zu erwärmen und auf diese Weise umzuformen. Beispielsweise können auf diese Weise Fahrzeugscheiben oder gebogenes Architekturglas hergestellt werden. Weiterhin ist aus der Praxis bekannt das im Ofen befindliche Glashalbzeug zusätzlich mit einer Strahlungsquelle lokal zu erwärmen und auf diese Weise größere Kontrolle über den Formgebungsprozess zu erlangen.

Gasbeheizte Tunnelöfen mit Brennerdüsen sind allgemein bekannt. US4883563 A offenbart Umluftsysteme für Tunnelöfen. GB813107 A lehrt einen Ofen mit mehreren Kammern zum Biegen von Glas.

Nachteilig an diesen bekannten Vorrichtungen und Verfahren ist die lange Zykluszeit des Umformprozesses aufgrund langsamer Erwärmung und Abkühlung des Glashalbzeuges. Ausgehend vom Stand der Technik liegt der Erfindung somit die Aufgabe zugrunde, eine Vorrichtung und ein Verfahren zur Umformung eines Glashalbzeuges anzugeben, welche kürzere Zykluszeiten und/oder verbesserte Kontrolle über den Umformprozess ermöglichen.

Die Aufgabe wird erfindungsgemäß durch eine Vorrichtung gemäß Anspruch 1 und ein Verfahren gemäß Anspruch 9 gelöst.

Vorteilhafte Weiterbildungen der Erfindung finden sich in den Unteransprüchen.

Erfindungsgemäß wird eine Vorrichtung vorgeschlagen, welche einen Ofen aufweist, welcher zumindest eine von einer Wandung begrenzte Ofenkammer aufweist. Zur Durchführung des Verfahrens wird ein Glashalbzeug in diese Ofenkammer eingebracht und erwärmt. In einigen Ausführungsformen der Erfindung kann die Erwärmung durch Konvektion und Strahlung erfolgen, bis das Glashalbzeug eine hinreichend niedrige Viskosität hat und schwerkraftgetrieben frei oder in einer Biegeform umgeformt wird. In anderen Ausführungsformen der Erfindung kann die Verweildauer des Glashalbzeuges und/oder die Temperatur in der Ofenkammer so gewählt sein, dass das Glashalbzeug eine erhöhte Temperatur annimmt, jedoch eine hinreichend mechanische Festigkeit behält, welche eine Umformung zunächst verhindert. Sodann kann in vorgebbare Teilflächen des Glashalbzeuges zusätzliche Wärme eingebracht werden, welche das Glashalbzeug über die Glasübergangstemperatur erwärmt und somit lokal zur Umformung führt.

Die vorstehend genannten Teilflächen können beispielsweise mit Infrarot-Laserstrahlung aus einem Laser erwärmt werden. Die Auswahl der Teilflächen kann beispielsweise über ein Linsensystem und/oder eine Maske erfolgen. In anderen Ausführungsformen der Erfindung kann der Laser gedreht bzw. geschwenkt werden, um den Strahl auf vorgebbare Teilflächen des Glashalbzeuges zu lenken. In wiederum anderen Ausführungsformen der Erfindung kann die Laserstrahlung über einen Scanner mit einem beweglichen Spiegel auf vorgebbaren Teilflächen des Glashalbzeuges gelenkt werden. Hierdurch kann der Laserstrahl schneller gesteuert werden, da statt eines vergleichsweise großen und schweren Lasers bzw. einer anderen Strahlungsquelle nur ein vergleichsweise kleiner und leichter Spiegel mechanisch bewegt werden muss.

Erfindungsgemäß wird nun vorgeschlagen, den Laserstrahl durch eine Öffnung in der Wandung in die Ofenkammer einzukoppeln. Dies hat den Vorteil, dass die Strahlungsquelle und/oder der Scanner mit dem beweglichen Spiegel mit den Aktoren nicht bei erhöhter Temperatur in der Ofenkammer betrieben werden muss.

Um eine starke Absorption der Laserstrahlung in der Wandung der Ofenkammer zu vermeiden wird vorgeschlagen, die Öffnung materialfrei in Form einer einfachen Durchgangsbohrung auszuführen. Erfindungsgemäß wird vorgeschlagen, auf eine Verglasung bzw. ein anderweitiges Fenster zu verzichten.

In einigen Ausführungsformen der Erfindung kann die Öffnung in der Wandung mit zumindest einem beweglichen Schieber zum temporären Verschließen der Öffnung versehen sein. Dadurch können Wärmverluste reduziert werden, wenn keine elektromagnetische Strahlung zur Erwärmung des Glashalbzeuges durch die Öffnung geleitet wird

In einigen Ausführungsformen der Erfindung kann die Öffnung in der Wandung mit zumindest einer Düse versehen sein, mit welcher ein Sperrluftstrom erzeugt werden kann. Insbesondere bei Anordnung der Öffnung in der Decke der Ofenkammer kommt es andernfalls zu einem Warmluftaustritt, da die in der Ofenkammer befindliche erwärmte Luft aufsteigt und wie durch einen Kamin entweichen kann. Der Sperrluftstrom kann dieser konvektiven Strömung entgegenwirken und so die Wärmeverluste der Ofenkammer vermindern. Hierdurch kann eine unerwünschte Erwärmung des den Ofen umgebenden Raumes vermieden werden. Darüber hinaus wird eine Zerstörung des Lasers und/oder des Scanners vermieden oder reduziert, da die Betriebstemperatur oberhalb der Öffnung reduziert ist. Schließlich kann der Energieverbrauch zur Beheizung der Ofenkammer reduziert sein. In einigen Ausführungsformen der Erfindung kann darüber hinaus die Temperaturverteilung innerhalb der Ofenkammer homogener sein, so dass die Qualität des in der erfindungsgemäßen Vorrichtung umgeformten Glashalbzeuges erhöht sein kann.

In einigen Ausführungsformen der Erfindung betrifft diese eine Vorrichtung, bei welcher die Düse als Ringdüse ausgebildet ist. In einigen Ausführungsformen der Erfindung kann der Sperrluftstrom mit einem Inertgas erzeugt werden.

In einigen Ausführungsformen der Erfindung betrifft diese eine Vorrichtung, bei welcher der Ofen eine Mehrzahl von Ofenkammern aufweist, welche dazu eingerichtet sind, vom Glashalbzeug sequentiell durchlaufen zu werden und welche auf unterschiedliche Temperatur bringbar sind.

In einigen Ausführungsformen der Erfindung betrifft diese eine vorstehend beschriebene Vorrichtung, weiterhin enthaltend zumindest eine Thermokamera, mit welcher die Temperaturverteilung des Glashalbzeuges bestimmbar ist. Die Thermokamera kann über einer zweiten Öffnung angeordnet sein, welche ebenfalls mit einer Düse zur Erzeugung eines Sperrluftstromes ausgestattet sein kann. Dadurch kann die Messgenauigkeit erhöht sein.

In einigen Ausführungsformen der Erfindung betrifft diese eine vorstehend beschriebene Vorrichtung, weiterhin enthaltend zumindest einen Prägestempel, mit welchem das Glashalbzeug umformbar ist.

In einigen Ausführungsformen der Erfindung betrifft diese eine Vorrichtung bei welcher der Prägestempel in einem Teilvolumen der Ofenkammer angeordnet ist, welches auf eine Temperatur bringbar ist, welche von der Temperatur des verbleibenden Teilvolumens der Ofenkammer abweicht.

In einigen Ausführungsformen der Erfindung betrifft diese eine Vorrichtung bei welcher dem zumindest einen Prägestempel gegenüberliegend ein komplementär geformter Gegenstempel angeordnet ist.

In einigen Ausführungsformen der Erfindung betrifft diese eine vorstehend beschriebene Vorrichtung, weiterhin enthaltend zumindest einem Laser, welcher dazu eingerichtet ist, einen Laserstrahl zu erzeugen und auf vorgebbare Teilflächen des Glashalbzeuges zu richten.

In einigen Ausführungsformen der Erfindung betrifft diese eine vorstehend beschriebene Vorrichtung, weiterhin enthaltend zumindest einen beweglichen Spiegel, mit welchem der Laserstrahl auf vorgebbare Teilflächen des Glashalbzeuges gelenkt werden kann.

In einigen Ausführungsformen der Erfindung betrifft diese eine vorstehend dargestellte Vorrichtung, weiterhin enthaltend eine Transportpalette und/oder eine Biegeform mit drei Kontaktpunkten, welche formschlüssig in zugeordnete Aufnahmevorrichtungen der Ofenkammer aufnehmbar sind.

In einigen Ausführungsformen der Erfindung betrifft diese eine Vorrichtung bei welcher sich der Schwerpunkt der Transportpalette bzw. der Biegeform innerhalb des durch die Kontaktpunkte aufgespannten Dreiecks befindet.

In einigen Ausführungsformen der Erfindung betrifft diese eine Vorrichtung, bei welcher die Kontaktpunkte einen V-förmigen Stützkörper aufweisen und die Aufnahmevorrichtungen einen runden Außenquerschnitt aufweisen.

In einigen Ausführungsformen der Erfindung betrifft diese eine Vorrichtung, bei welcher zumindest eine Aufnahmevorrichtung dazu eingerichtet ist, eine Mehrzahl von Kontaktpunkten aufzunehmen.

In einigen Ausführungsformen der Erfindung betrifft diese eine vorstehend beschriebene Vorrichtung, weiterhin enthaltend zumindest ein Umluftsystem, mit welchem die Luft in der Ofenkammer zirkulierbar ist.

In einigen Ausführungsformen der Erfindung betrifft diese eine vorstehend beschriebene Vorrichtung, weiterhin enthaltend zumindest ein Strahlungsblech, welches innerhalb der Ofenkammer angeordnet ist und zumindest einen Teil der Wandung bedeckt, welcher auf der Sichtachse des Glashalbzeuges liegt.

In einigen Ausführungsformen der Erfindung betrifft diese eine vorstehend beschriebene Vorrichtung, weiterhin enthaltend eine Heizeinrichtung, mit welcher zumindest ein Strahlungsblech auf eine vorgebbare Temperatur bringbar ist.

In einigen Ausführungsformen der Erfindung betrifft diese eine Vorrichtung, bei welcher das Umluftsystem dazu eingerichtet ist, einen Luftstrom zu erzeugen, welcher zumindest einen Teil eines Strahlungsbleches und/oder einen Teil der Wandung hinterströmt.

In einigen Ausführungsformen der Erfindung betrifft diese eine vorstehend beschriebene Vorrichtung, weiterhin enthaltend ein Positioniersystem, mit welchem das Glashalbzeug innerhalb der Ofenkammer um zumindest eine Achse verschiebbar ist.

In einigen Ausführungsformen der Erfindung betrifft diese eine vorstehend beschriebene Vorrichtung, weiterhin enthaltend ein Positioniersystem, mit welchem das Glashalbzeug innerhalb der Ofenkammer um zumindest eine Achse drehbar ist.

In einigen Ausführungsformen der Erfindung betrifft diese ein Verfahren zur Umformung eines Glashalbzeuges, bei welchem das Glashalbzeug in einen Ofen mit zumindest einer von einer Wandung begrenzten Ofenkammer eingebracht wird.

In einigen Ausführungsformen der Erfindung kann in der Wandung zumindest eine Öffnung vorhanden sein, welche mit zumindest einer Düse versehen ist, mit welcher ein Sperrluftstrom erzeugt wird.

In einigen Ausführungsformen der Erfindung betrifft diese ein Verfahren zur Umformung eines Glashalbzeuges, bei welcher der Ofen eine Mehrzahl von Ofenkammern aufweist, welche vom Glashalbzeug sequentiell durchlaufen werden und welche sich auf unterschiedlicher Temperatur befinden.

In einigen Ausführungsformen der Erfindung betrifft diese ein Verfahren zur Umformung eines Glashalbzeuges bei welchem die Temperaturverteilung des Glashalbzeuges mit zumindest einer Thermokamera bestimmt wird.

In einigen Ausführungsformen der Erfindung betrifft diese ein Verfahren zur Umformung eines Glashalbzeuges, bei welchem das Glashalbzeug mit einem Prägestempel umgeformt wird.

In einigen Ausführungsformen der Erfindung betrifft diese ein Verfahren zur Umformung eines Glashalbzeuges, bei welchem der Prägestempel in einem Teilvolumen der Ofenkammer angeordnet ist, welches auf eine Temperatur bringbar ist, welche von der Temperatur des verbleibenden Teilvolumens der Ofenkammer abweicht.

In einigen Ausführungsformen der Erfindung betrifft diese ein Verfahren zur Umformung eines Glashalbzeuges, bei welchem dem zumindest einen Prägestempel gegenüberliegend ein komplementär geformter Gegenstempel angeordnet ist.

In einigen Ausführungsformen der Erfindung betrifft diese ein Verfahren zur Umformung eines Glashalbzeuges, bei welchem mit zumindest einem Laser, welcher einen Laserstrahl erzeugt, eine vorgebbare Teilfläche des Glashalbzeuges erwärmt wird.

In einigen Ausführungsformen der Erfindung betrifft diese ein Verfahren zur Umformung eines Glashalbzeuges, bei welchem der Laserstrahl durch zumindest einen beweglichen Spiegel auf vorgebbare Teilflächen des Glashalbzeuges gelenkt wird.

In einigen Ausführungsformen der Erfindung betrifft diese ein Verfahren zur Umformung eines Glashalbzeuges, bei welchem das Glashalbzeug auf einer Transportpalette und/oder einer Biegeform angeordnet wird, welche auf der dem Glashalbzeug abgewandten Seite drei Kontaktpunkten aufweist, welche formschlüssig in zugeordnete Aufnahmevorrichtungen der Ofenkammer aufgenommen werden.

In einigen Ausführungsformen der Erfindung betrifft diese ein Verfahren zur Umformung eines Glashalbzeuges, bei welchem sich der Schwerpunkt der Transportpalette bzw. der Biegeform innerhalb des durch die Kontaktpunkte aufgespannten Dreiecks befindet.

In einigen Ausführungsformen der Erfindung betrifft diese ein Verfahren zur Umformung eines Glashalbzeuges, bei welchem die Kontaktpunkte einen V-förmigen Stützkörper aufweisen und die Aufnahmevorrichtungen einen runden Außenquerschnitt aufweisen.

In einigen Ausführungsformen der Erfindung betrifft diese ein Verfahren zur Umformung eines Glashalbzeuges, bei welchem zumindest eine Aufnahmevorrichtung eine Mehrzahl von Kontaktpunkten aufnimmt.

In einigen Ausführungsformen der Erfindung betrifft diese ein Verfahren zur Umformung eines Glashalbzeuges, bei welchem das Glashalbzeug in einen Ofen eingebracht wird, welcher zumindest ein Umluftsystem aufweist, mit welchem die Luft in der Ofenkammer zirkuliert wird.

In einigen Ausführungsformen der Erfindung betrifft diese ein Verfahren zur Umformung eines Glashalbzeuges, bei welchem das Glashalbzeug in einen Ofen eingebracht wird, welcher zumindest ein Strahlungsblech, welches innerhalb der Ofenkammer angeordnet ist und welches zumindest einen Teil der Wandung bedeckt, welcher auf einer Sichtachse des Glashalbzeuges liegt.

In einigen Ausführungsformen der Erfindung betrifft diese ein Verfahren zur Umformung eines Glashalbzeuges, bei welchem das Glashalbzeug in einen Ofen eingebracht wird, welcher zumindest eine Heizeinrichtung enthält, mit welcher zumindest ein Strahlungsblech auf eine vorgebbare Temperatur bringbar ist.

In einigen Ausführungsformen der Erfindung betrifft diese ein Verfahren zur Umformung eines Glashalbzeuges, bei welchem das Glashalbzeug in einen Ofen eingebracht wird, bei welchem das Umluftsystem dazu eingerichtet ist, einen Luftstrom zu erzeugen, welcher zumindest einen Teil eines Strahlungsbleches und/oder einen Teil der Wandung hinterströmt.

In einigen Ausführungsformen der Erfindung betrifft diese ein Verfahren zur Umformung eines Glashalbzeuges, bei welchem das Glashalbzeug mit zumindest einem Positioniersystem innerhalb der Ofenkammer um zumindest eine Achse verschoben wird.

In einigen Ausführungsformen der Erfindung betrifft diese betrifft diese ein Verfahren zur Umformung eines Glashalbzeuges, bei welchem das Glashalbzeug mit zumindest einem Positioniersystem, mit welchem das Glashalbzeug innerhalb der Ofenkammer innerhalb der Ofenkammer um zumindest eine Achse gedreht wird.

Nachfolgend soll die Erfindung anhand von Figuren ohne Beschränkung des allgemeinen Erfindungsgedankens näher erläutert werden. Dabei zeigt
Figur 1 eine erste Ausführungsform einer erfindungsgemäßen Vorrichtung.
Figur 2 zeigt eine schematische Darstellung einer zweiten Ausführungsform einer erfindungsgemäßen Vorrichtung.
Figur 3 erläutert die Positionierung des Glashalbzeuges in einer ersten Ausführungsform.
Figur 4 erläutert die Positionierung des Glashalbzeuges in einer zweiten Ausführungsform.
Figur 5 erläutert die Positionierung des Glashalbzeuges in einer dritten Ausführungsform.
Figur 6 zeigt eine Positionierhilfe einer Transportpalette.
Figur 7 zeigt die Aufsicht auf eine dritte Ausführungsform einer erfindungsgemäßen Vorrichtung.
Figur 8 zeigt eine weitere Aufsicht auf die dritte Ausführungsform einer erfindungsgemäßen Vorrichtung.
Figur 9 zeigt den Querschnitt durch eine erfindungsgemäße Vorrichtung gemäß einer vierten Ausführungsform.

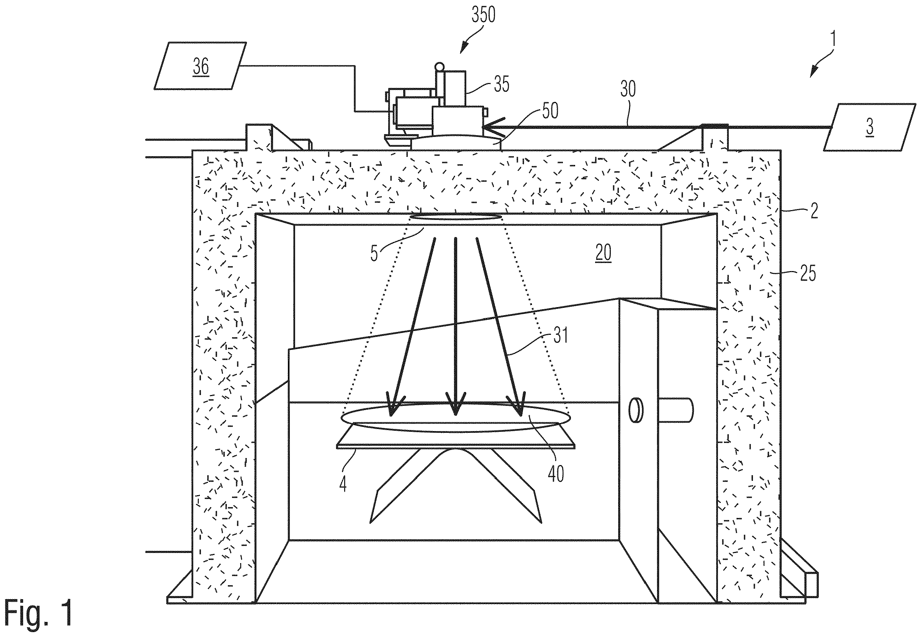

Figur 1 zeigt eine erste Ausführungsform einer erfindungsgemäßen Vorrichtung. Diese enthält einen Ofen 2. Der Ofen 2 enthält eine Ofenkammer 20, welche von einer Wandung 25 umschlossen ist. Die Wandung kann eine Wärmedämmung aufweisen, um Wärmeverluste in die Umgebung zu reduzieren. Das Material der Wandung kann ein Metall oder eine Legierung oder einen mineralischen Werkstoff enthalten oder daraus bestehen, beispielsweise Schamott oder Keramik. Ein Metall oder eine Legierung kann mit einer wärmedämmenden Beschichtung versehen sein, welche beispielsweise ein Oxid oder ein Nitrid enthält. Der Ofen 2 enthält darüber hinaus nicht dargestellte Heizeinrichtungen, mit welchen die Ofenkammer 20 beheizt werden kann. In einigen Ausführungsformen der Erfindung kann die Temperatur in der Ofenkammer 20 zwischen etwa 400°C und etwa 800°C oder zwischen etwa 500°C und etwa 700°C betragen.

Weiterhin zeigt Fig. 1 ein Glashalbzeug 4. Das Glashalbzeug kann beispielsweise ein Flachglas sein. In andern Ausführungsformen der Erfindung kann das Glashalbzeug 4 auch eine andere Form aufweisen, beispielsweise ein Zylinder, eine Kugel, oder jede andere Geometrie.

In der Decke der Ofenkammer 20 ist eine Öffnung 5 angeordnet. Die Öffnung 5 kann mit einem beweglichen Schieber verschlossen werden, um Wärmeverluste durch Austreten von Warmluft aus der Ofenkammer 20 zu vermindern oder zu verhindern. Der bewegliche Schieber kann hierzu ebenfalls aus einem Metall oder einer Legierung oder einem mineralischen Material bestehen bzw. solche Materialien enthalten. Auch der Schieber kann mit einer Beschichtung versehen sein.

Bei Betrieb der Vorrichtung wird das Glashalbzeug 4 auf eine vorgebbare Temperatur unterhalb der Glasübergangstemperatur erwärmt. Sodann wird in einzelnen, vorgebbaren Teilflächen 40 des Glashalbzeuges 4 zusätzliche Wärmeenergie eingebracht. Dies erfolgt durch Infrarotstrahlung, welche auf die gewünschte Teilflächen 40 gelenkt wird.

Zur Erzeugung der Infrarotstrahlung kann in einigen Ausführungsformen ein Laser 3 verwendet werden. Der Laser kann in einigen Ausführungsformen der Erfindung ein CO₂-Laser sein. Der Laser 3 erzeugt einen Laserstrahl 30. Der Laserstrahl 30 kann eine Leistung zwischen etwa 100 W und etwa 5000 W oder zwischen etwa 1000 W und etwa 2500 W aufweisen.

Der Laserstrahl 30 wird in der dargestellten Ausführungsform über einen Scanner 350 in das Innere der Ofenkammer 20 gelenkt. Der Scanner 350 weist einen beweglichen Spiegel 35 auf, welcher in an sich bekannter Weise durch Aktoren bewegt und/oder gedreht werden kann. Hierzu können beispielsweise Piezosteller und/oder Elektromotoren verwendet werden. Der Spiegel 35 des Scanner 350 kann in einigen Ausführungsformen durch ein Computersystem 36 gesteuert werden, in welchem ein Computerprogramm abgelegt ist, welches die Lage des am Spiegel 35 abgelenkten Laserstrahls 31 beeinflusst und damit vorgebbare Teilflächen 40 des Glashalbzeuges 4 auswählt.

Damit der Laserstrahl 30 in das Innere der Ofenkammer 20 eindringen kann, wird ein optionaler Schieber von der Öffnung 5 entfernt bzw. geöffnet. Dies kann dazu führen, dass durch Kaminwirkung heiße Luft durch die Öffnung 5 aus der Ofenkammer 20 entweicht. Erfindungsgemäß wird daher vorgeschlagen, zumindest eine Düse 50 vorzusehen, mit welcher ein Sperrluftstrom erzeugbar ist. Die Düse 50 kann beispielsweise als Ringdüse ausgeführt sein. Der durch die Düse 50 erzeugte Sperrluftstrom wirkt dem durch Konvektion aufsteigenden Luftstrom entgegen, so dass der Austritt heißer Luft aus der Ofenkammer 20 reduziert ist oder vollständig verhindert werden kann. Dies hat den Vorteil, dass der Scanner 350 einer geringeren thermischen Belastung ausgesetzt ist. Darüber hinaus kann der Energieverbrauch zur Beheizung des Ofens 2 reduziert sein und/oder die Temperaturverteilung des Glashalbzeuges 4 gleichmäßiger sein.

Obgleich Fig. 1 nur eine einzige Öffnung 5 mit einem einzigen Scanner 350 zeigt, kann in einigen Ausführungsformen der Erfindung ein Ofen 2 mit einer Mehrzahl von Öffnungen 5 und jeweils zugeordneten Lasern und Scannern 350 vorhanden sein. Hierdurch kann die von einer Mehrzahl abgelenkter Laserstrahlen 31 überstrichene Fläche des Glashalbzeuges 4 vergrößert sein, so dass auch sehr große Glashalbzeuge umgeformt werden können, beispielsweise LKW-Scheiben oder Architekturglas.

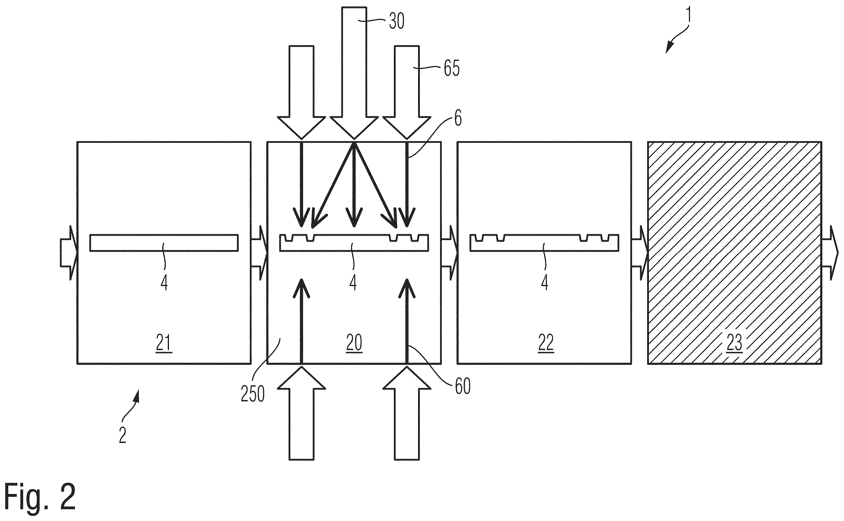

Fig. 2 zeigt eine zweite Ausführungsform der Erfindung. Gleiche Bestandteile sind mit gleichen Bezugszeichen versehen, so dass sich die nachfolgende Beschreibung im Wesentlichen auf die Unterschiede beschränkt. Fig. 2 zeigt eine Vorrichtung 1, welche einen Ofen 2 enthält. Der Ofen 2 weist eine Mehrzahl von Ofenkammern 20, 21, 22 und 23 auf. Die Ofenkammern sind so zueinander angeordnet, dass ein Glashalbzeug 4 beginnend von der ersten Ofenkammer 21 die weiteren Ofenkammern 20, 22 und 23 fortlaufend sequentiell durchlaufen kann. Die Ofenkammern können auf unterschiedlichen Temperaturen gehalten werden, so dass das Glashalbzeug 4 in jeder Ofenkammer einen unterschiedlichen Bearbeitungsschritt erfährt. Die einzelnen Ofenkammern müssen nicht in jeder Ausführungsform baulich getrennt sein. In einigen Ausführungsformen der Erfindung kann eine einzige geometrische Ofenkammer in unterschiedliche Funktionszonen mit unterschiedlicher Temperatur unterteilt sein.

In der ersten Ofenkammer 21 kann das Glashalbzeug 4 vorgewärmt werden. Hierzu kann die Ofenkammer eine Temperatur zwischen 250°C und etwa 550°C oder zwischen etwa 400° und etwa 500° aufweisen.

Nachfolgend wird das Glashalbzeug 4 in die zweite Ofenkammer 20 transferiert. Diese kann sich auf einer Temperatur zwischen etwa 400° und etwa 600° befinden. Die Umformung kann durch lokales Erwärmen durch Infrarotstrahlung erfolgen, wie vorstehend im Zusammenhang mit Fig. 1 beschrieben. Insbesondere kann Laserstrahlung 30 verwendet werden.

Alternativ oder zusätzlich können Prägestempel 6 verwendet werden, welche das Glashalbzeug 4 an vorgebbaren Stellen prägen und dadurch umformen. Hierzu können die Prägestempel 6 durch Aktoren 65 bewegt werden, beispielsweise Schubstangen, pneumatische Aktoren, Piezoaktoren oder andere, an sich bekannte Stellglieder. Die Prägestempel 6 können auf eine Arbeitstemperatur vorgewärmt werden, welche oberhalb der Temperatur des Glashalbzeuges 4 und/oder oberhalb der Temperatur der Ofenkammer 20 liegt. Hierzu können die Prägestempel 6 in einem räumlich begrenzten Bereich 250 der Ofenkammer 20 angeordnet werden, welcher eine andere Temperatur aufweist als das verbliebene Teilvolumen der Ofenkammer 20 mit dem Glashalbzeug 4. Beispielsweise können im Teilvolumen 250 zusätzliche Heizeinrichtungen vorhanden sein, welche in Form von Infrarotstrahlern oder Widerstandsheizungen ausgeführt sind. In anderen Ausführungsformen der Erfindung können die Prägestempel 6 mit elektrischen Heizeinrichtungen ausgestattet sein.

In einigen Ausführungsformen der Erfindung können den Prägestempeln 5 gegenüberliegend komplementär geformte Gegenstempel 60 vorhanden sein. Hierdurch kann eine unerwünschte Verformung des Glashalbzeuges 4 unter der Einwirkung des Prägestempels 6 vermieden werden. Alternativ kann der Gegenstempel 6 dazu eingerichtet sein, auch die dem Prägestempel 6 gegenüberliegende Seite des Glashalbzeuges 4 mit einer gewünschten komplementären Form zu versehen.

Nach der erfolgten Umformung kann das Glashalbzeug 4 einer dritten Ofenkammer 22 zugeführt werden, welcher wiederum eine andere Temperatur aufweisen kann als die vorangegangene zweite Ofenkammer 20. Beispielsweise kann die Temperatur der dritten Ofenkammer 22 zwischen der Temperatur der ersten Ofenkammer 21 und der Temperatur der zweiten Ofenkammer 20 liegen. In einigen Ausführungsformen der Erfindung kann die Temperatur der zweiten Ofenkammer 20 zwischen etwa 200° und etwa 500° oder zwischen etwa 300° und etwa 400° betragen.

Durch Lagern des Glashalbzeuges 4 in der dritten Ofenkammer 22 kann das Glashalbzeug 4 kontrolliert abgekühlt werden, so dass sich mechanische Spannungen innerhalb des Glashalbzeuges 4 abbauen. Während das Glashalbzeug 4 in der dritten Ofenkammer 22 kontrolliert abgekühlt wird, kann bereits ein weiteres Glashalbzeug in der zweiten Ofenkammer 20 umgeformt und ein drittes Glashalbzeug 4 in der ersten Ofenkammer 21 vorgewärmt werden. Durch den kontinuierlichen Durchlauf der Glashalbzeuge 4 durch die Ofenkammern 21, 20 und 22 kann die Zykluszeit verringert und der Durchsatz der Vorrichtung 1 erhöht werden.

In der optionalen vierten Ofenkammer 23 kann bei vergleichsweise niedriger Temperatur ein optionales Schockkühlen des Glashalbzeuges 4 durchgeführt werden. Auf diese Weise kann beispielsweise ein Glasartikel aus vorgespanntem Glas hergestellt werden, welches einerseits eine gehärtete Oberfläche aufweist und dadurch widerstandsfähiger wird und andererseits ein anderes Bruchverhalten aufweist, so dass das Auftreten großer, scharfkantiger Fragmente vermieden wird. Hierzu kann die vierte Ofenkammer 23 eine Temperatur zwischen etwa -50°C und 100°C aufweisen, so dass das Glashalbzeug rasch auf eine Temperatur unter 350°C abgekühlt werden kann. Es ist jedoch darauf hinzuweisen, dass die vierte Ofenkammer 23 optional ist und in anderen Ausführungsformen der Erfindung auch entfallen kann. Sofern die vierte Ofenkammer 23 eingesetzt wird, kann die vorstehend beschriebene dritte Ofenkammer 22 zur Vorbereitung des thermischen Vorspannens eine Temperatur zwischen etwa 650°C und etwa 750°C aufweisen.

In einigen Ausführungsformen der Erfindung kann die erfindungsgemäße Vorrichtung eine Transportpalette und/oder eine Biegeform aufweisen, auf welcher das Glashalbzeug in der Ofenkammer 20 bzw. zwischen einer Mehrzahl von Ofenkammern bewegt wird. In einigen Ausführungsformen der Erfindung wird vorgeschlagen, dass diese Transportpalette drei Kontaktpunkte aufweist, welche formschlüssig in zugeordnete Aufnahmevorrichtungen der Ofenkammer aufnehmbar sind. Dies erlaubt eine reproduzierbare Positionierung, so dass das Glashalbzeug 4 stets in der gleichen relativen Lage zum Scanner 350 und/oder zum Prägestempel 6 positioniert wird. Somit werden stets die gleichen Teilflächen des Glashalbzeuges 4 erwärmt bzw. umgeformt.

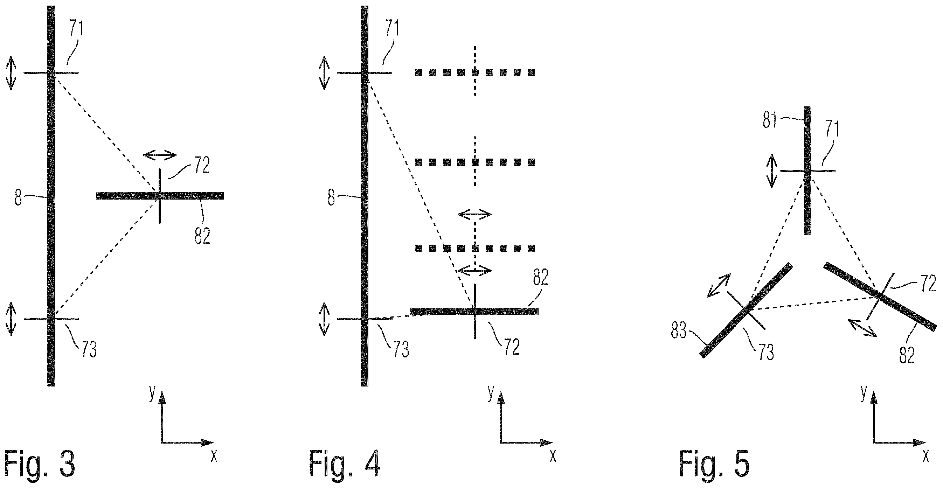

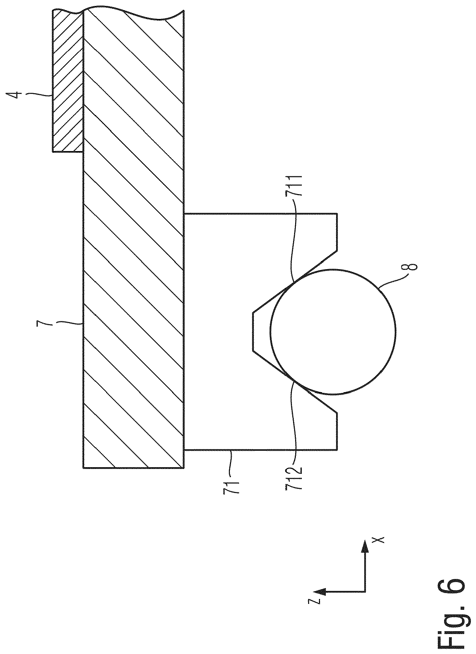

Figur 3 zeigt eine erste Ausführungsform der Kontaktpunkte 71, 72 und 73 einer Transportpalette. Wie nachfolgend zusammenfassend mit Figur 6 ausgeführt werden wird, sind die Kontaktpunkte 71, 72 und 73 so ausgestaltet, dass diese eine exakte Positionierung in zwei Raumrichtungen ermöglichen sowie eine Verschiebbarkeit in der dritten Raumrichtung.

Die zugeordneten Aufnahmevorrichtungen 8 der Ofenkammer werden beispielsweise durch polygonale oder runde Rohre bzw. Stäbe gebildet. Dabei ist eine vergleichsweise langgestreckte Aufnahmevorrichtung zur Aufnahme der Kontaktpunkte 71 und 73 vorgesehen. Diese erlauben eine Positionierung in X-Richtung der mit den Kontaktpunkten 71 und 73 ausgestatteten Transportpalette sowie eine Verschiebbarkeit in Y-Richtung.

Die weitere Aufnahmevorrichtung 82 für den Kontaktpunkt 72 ist nicht parallel zur ersten Aufnahmevorrichtung angeordnet. In einigen Ausführungsformen der Erfindung können die Aufnahmevorrichtungen 8 und 82 einen Winkel von etwa 60° bis etwa 120° oder etwa 90° einschließen. Die Aufnahmevorrichtung erlaubt eine Verschiebbarkeit des zweiten Kontaktpunktes 72 in X-Richtung und eine eindeutige Positionierung in Y-Richtung. Somit können Transportpaletten im Ofen aufgenommen und im Zusammenwirken der drei Kontaktpunkte eindeutig positioniert werden. Transportpaletten mit unterschiedlicher Größe können jedoch unterschiedliche Abstände der ersten und dritten Kontaktpunkte 71 und 72 zueinander aufweisen und einen unterschiedlichen Abstand des zweiten Kontaktpunkte 72 zur Verbindungslinie des ersten und dritten Kontaktpunktes. Somit ist die Positionierung auch unterschiedlicher Transportpaletten bzw. Biegeformen möglich, so dass ohne Umbaumaßnahmen in der Ofenkammer unterschiedliche Produkte gefertigt werden können. Ein Abkühlen des Ofens zur Umstellung der Produktion kann daher vermieden werden.

Da die Transportpalette an den Kontaktpunkten nicht fest eingespannt ist, sondern in X- und Y-Richtung beweglich ist, kann es auch bei Temperaturwechseln, welche beim Einbringen eines kalten Glashalbzeuges auf einer kalten Transportpalette in den bereits erwärmten Ofen unausweichlich sind, nicht zum Auftreten mechanischer Spannungen kommen, welche die Maßhaltigkeit des Glasbauteils gefährden und/oder zu mechanischen Schäden an der Transportpalette und/oder dem Ofen führen können.

Die Transportpaletten bzw. die Biegeformen können durch Schwerkraft auf den Aufnahmevorrichtungen in der Ofenkammer aufliegen und dadurch auch in der zur dargestellten X- und Y-Richtung orthogonalen Raumrichtung Z eindeutig definiert positioniert werden. In einer Ausführungsform der Erfindung kann sich der Schwerpunkt der Transportpalette bzw. der Biegeform innerhalb des durch die Kontaktpunkte 71, 72 und 73 aufgespannten Dreiecks befinden. Hierdurch ist eine stabile Lage der Transportpalette innerhalb des Ofens sichergestellt.

Figur 4 zeigt eine zweite Ausführungsform der erfindungsgemäßen Positioniereinrichtung. Gleiche Bestandteile der Erfindung sind mit gleichen Bezugszeichen versehen, so dass sich die nachfolgende Beschreibung auf die wesentlichen Unterschiede beschränkt.

Wie in Figur 4 dargestellt ist, ist die Aufnahmevorrichtung 82 für den zweiten Kontaktpunkt 72 parallel zur Aufnahmevorrichtung 8 verschiebbar ausgeführt, so dass die Winkelbeziehung zur ersten Aufnahmevorrichtung der Kontaktpunkte 71 und 73 unverändert bleibt. Jedoch kann die Aufnahmevorrichtung in einer Richtung parallel zur ersten Aufnahmevorrichtung 8 verschoben werden, so dass entweder eine Anpassung an unterschiedliche Transportpaletten erfolgen kann und/oder die Transportpalette durch Verschieben der Aufnahmevorrichtung 82 innerhalb des Ofens positioniert und/oder transportiert werden kann. Zur Illustration dieses Sachverhaltes sind vier mögliche Positionen der zweiten Aufnahmevorrichtung 82 dargestellt.

Figur 5 zeigt eine dritte Ausführungsform der erfindungsgemäßen Positioniereinrichtung. Auch in diesem Fall sind gleiche Bestandteile der Erfindung mit gleichen Bezugszeichen versehen, so dass sich die nachfolgende Beschreibung auf die wesentlichen Unterschiede beschränkt.

Die dritte Ausführungsform verwendet drei Aufnahmevorrichtungen, 81, 82 und 83 innerhalb der Ofenkammer 20 angeordnet, welche jeweils in zugeordnete Kontaktpunkte 71, 72 und 73 eingreifen. Die drei Aufnahmevorrichtungen sind wieder als längliche Elemente ausgeführt, welche beispielsweise einen polygonalen oder runden Querschnitt aufweisen können.

Die Längsachsen der Aufnahmevorrichtungen schließen jeweils einen Winkel von 120° zueinander ein. Durch die längliche Ausdehnung können wiederum Transportpaletten und/oder Biegeformen mit unterschiedlicher Größe bzw. mit unterschiedlichen Abstand der Aufnahmevorrichtungen zueinander aufgenommen werden, ohne dass Umbaumaßnahmen notwendig sind. gleichwohl erlaubt die Positioniereinrichtung eine reproduzierbare Lagebeziehung der damit ausgestatteten Transportpalette zu den übrigen Einrichtungen des Ofens, beispielsweise einem Scanner 350. Diese Positionierung schließt sowohl Winkel als auch Lage ein.

Figur 6 zeigt nochmals einen Ausschnitt aus einer Transportpalette 7 mit einem Kontaktpunkt 71 und einer Aufnahmevorrichtung 8 im Schnitt. Im dargestellten, stark vereinfachten Ausführungsbeispiel ist die Transportpalette 7 eine planparallele Platte, welche beispielsweise ein Metall oder eine Legierung oder eine Keramik enthält. Optional kann die Transportpalette 7 in einer nicht dargestellten Beschichtung versehen sein, welcher ein Anhaften des Glashalbzeuges 4 vermeidet und/oder die Temperaturbeständigkeit erhöht.

Auf der dem Glashalbzeug 4 gegenüberliegenden Seite der Transportpalette 7 ist ein Kontaktpunkt 71 dargestellt, welcher einen polygonalen Querschnitt aufweist. Der dargestellte Querschnitt ergibt sich durch Einbringen einer in etwa V-förmigen Nut in einen quaderförmigen Grundkörper. Die Nut kann einen abgeflachten Grund aufweisen.

Die zugehörige Aufnahmevorrichtung 8 besteht aus einem Stab bzw. Rohr mit etwa kreisrundem Außenquerschnitt. Durch das Eigengewicht der Transportpalette 7 kommt die V-förmige Nut des Kontaktpunktes 71 so an der Aufnahmevorrichtung zu liegen, dass diese an zwei Kontaktpunkten bzw. Kontaktlinien 711 und 712 aufliegt. Hierdurch ergibt sich eine definierte Positionierung sowohl in X-Richtung als auch in der dazu orthogonalen Z-Richtung.

Im Zusammenwirken mit weiteren Aufnahmevorrichtungen und Kontaktpunkten kann somit eine präzise Positionierung in allen drei Raumrichtungen und allen drei Drehrichtungen erfolgen, wie vorstehend anhand der Figuren 3 bis 5 erläutert wurde.

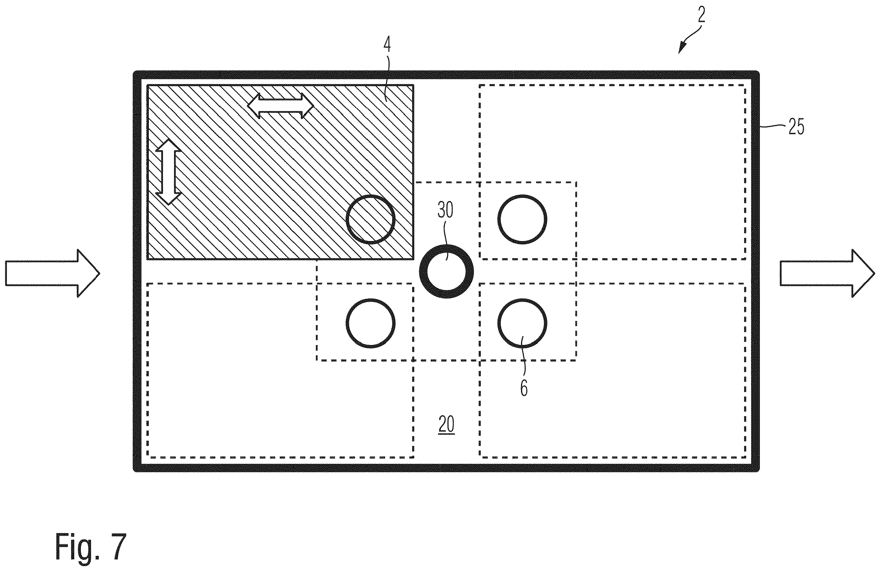

Figur 7 zeigt die Aufsicht auf eine Ofenkammer 20, welche von einer Wandung 25 begrenzt ist. Die Ofenkammer 20 ist mit vier Prägestempeln 6 ausgestattet, welche in einer rechteckigen Anordnung konzentrisch um den Auftreffpunkt eines Laserstrahls 30 angeordnet sind.

Dargestellt ist weiterhin ein Glashalbzeug 4 mit einer etwa rechteckigen Grundform. Das Glashalbzeug 4 kann innerhalb der Ofenkammer 20 verschoben werden. Fünf mögliche Positionen sind in Figur 7 angedeutet. Hieraus ist ersichtlich, dass das Glashalbzeug 4 beispielsweise in eine Position gebracht werden kann in welcher alle vier Prägestempel 6 gleichzeitig oder sequentiell auf das Glashalbzeug 4 einwirken und jeden Punkt des Glashalbzeuges erreichen können. In anderen Ausführungsformen der Erfindung kann das Glashalbzeug 4 so unter dem Laserstrahl 30 bewegt werden, dass vorgebbare Teilflächen sequentiell durch den Laserstrahl 30 erwärmt werden und sich hierdurch umformen lassen. Durch die Bewegung des Glashalbzeuges 4 innerhalb des Ofens 2 kann somit auf den Einsatz eines Scanners 350 verzichtet werden und gleichwohl eine relative Bewegung zwischen dem Laserstrahl 30 und dem Glashalbzeug 4 realisiert werden.

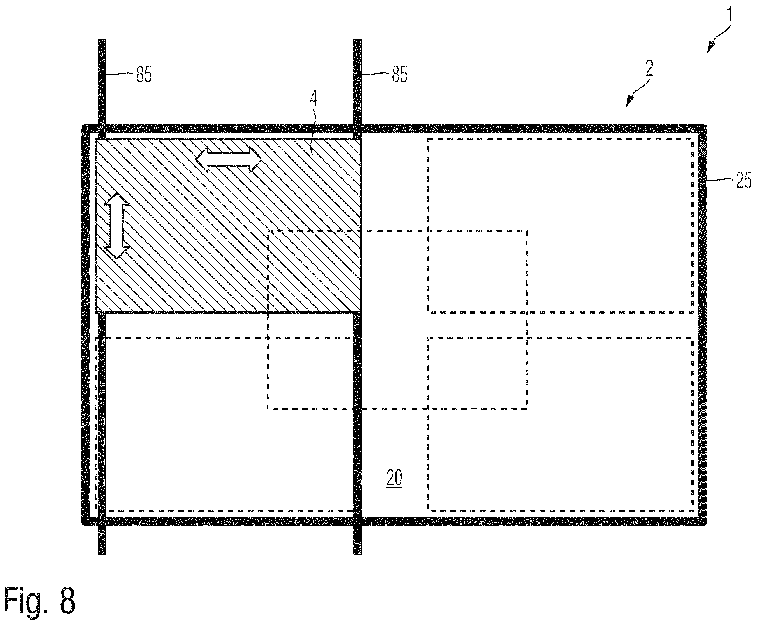

Figur 8 zeigt eine weitere Aufsicht eines Ofens 2 einer Vorrichtung 1 gemäß der vorliegenden Erfindung.

Auch Figur 8 zeigt eine Aufsicht auf den Boden einer Ofenkammer 20 eines Ofens 2, welcher von einer Wandung 25 begrenzt ist. Anhand von Figur 8 wird der Mechanismus verdeutlicht, welcher zum Bewegen des Glashalbzeuges 4 innerhalb der Ofenkammer 20 einsetzbar ist. Dieser besteht aus zwei Aufnahmevorrichtungen 85, welche in etwa parallel zueinander verlaufen. Diese Aufnahmevorrichtungen sind in zwei Achsen verschiebbar, so dass das Glashalbzeug 4 innerhalb der Ofenkammer 20 positioniert werden kann. Auf diese Weise kann das Glashalbzeug 4 in den Wirkbereich von Prägestempeln und/oder Laserstrahlen gebracht werden, welche aus Gründen der Übersichtlichkeit in Figur 8 nicht erneut dargestellt sind. Ebenso kann das Glashalbzeug in unterschiedliche Temperaturzonen bewegt werden, um beispielsweise die Arbeitsschritte Vorwärmen, Umformen und Tempern zu realisieren.

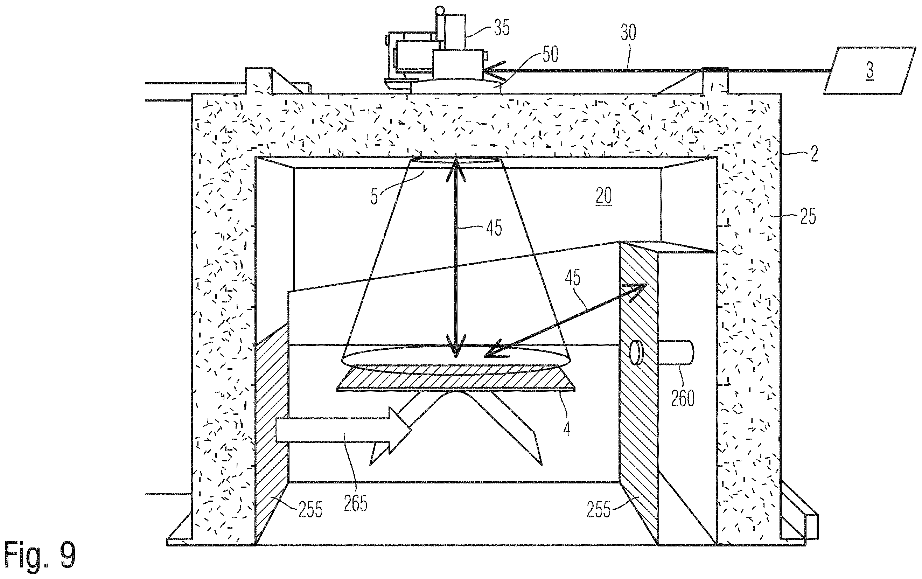

Figur 9 zeigt einen Querschnitt durch einen Ofen 2 gemäß einer vierten Ausführungsform der Erfindung. Gleiche Bestandteile der Erfindung sind mit gleichen Bezugszeichen versehen, so dass die nachfolgende Beschreibung auf die wesentlichen Unterschiede beschränkt bleibt.

Dargestellt ist wieder eine Ofenkammer 20, in welcher sich ein Glashalbzeug 4 befindet. Der Ofen 2 ist als Umluftofen ausgeführt, d.h. die nicht dargestellte Heizeinrichtung erwärmt die Ofenluft und führt diese mittels einer Fördereinrichtung als Luftstrom 265 der Ofenkammer 20 zu. Durch den Luftstrom 265 kann eine homogenere und gleichmäßigere Erwärmung des Glashalbzeuges 4 ermöglicht werden.

Darüber hinaus besteht eine Sichtverbindung 45 zwischen einzelnen Teilflächen des Glashalbzeuges 4 und den Ofenwänden 25. Hierdurch kommt es zusätzlich zum konvektiven Wärmeaustausch auch zum Austausch von Strahlungswärme zwischen dem Glashalbzeug 4 und der Wandung 25 der Ofenkammer 20. Selbstverständlich sind die zwei eingezeichneten Sichtlinien 45 nur beispielhaft zu verstehen. Tatsächlich existiert eine Vielzahl solcher Sichtlinien zwischen einzelnen Teilflächen des Glashalbzeuges 4 und jeweils zugeordneten Teilflächen der Wandung 24 der Ofenkammer 20.

Sofern die Wandung 25 eine niedrigere Temperatur hat als das Glashalbzeug in der Ofenkammer 20, führt der Strahlungsaustausch zu einer Entwärmung des Glashalbzeuges 4. Hierdurch kann eine homogene Erwärmung des Glashalbzeuges 4 verhindert oder erschwert werden.

Erfindungsgemäß wird daher vorgeschlagen, Strahlungsbleche 255 im Inneren der Ofenkammer 20 anzuordnen, welche auf eine gegenüber der Wandung erhöhte Temperatur gebracht werden können. Die Strahlungsbleche 255 können beispielsweise durch zusätzliche elektrische oder gasbetriebene Heizeinrichtungen erwärmt werden. In anderen Ausführungsformen der Erfindung kann der Warmluftstrom 265 zur Hinterlüftung von Strahlungsblechen verwendet werden, so dass diese Wärme aus dem Warmluftstrom 265 aufnehmen können. Auf diese Weise kann sichergestellt werden, dass der das Glashalbzeug 4 umgebende Halbraum gleichmäßig Strahlungswärme mit dem Glashalbzeug austauscht, so dass eine inhomogene Entwärmung bzw. Aufheizung des Glashalbzeuges 4 vermieden wird. Durch den kontrollierten Strahlungsaustausch zwischen dem Glashalbzeug und den Innenwänden der Ofenkammer kann somit eine bessere Kontrolle der Temperaturverteilung im Glashalbzeug 4 erreicht werden. In einigen Ausführungsformen der Erfindung können hierzu alle Strahlungsbleche 255 im Inneren der Ofenkammer 20 die selbe Temperatur aufweisen. In einigen Ausführungsformen der Erfindung kann dies die Temperatur der Luft in der Ofenkammer 20 sein.

Selbstverständlich ist die Erfindung nicht auf die dargestellten Ausführungsformen beschränkt. Die vorstehende Beschreibung ist daher nicht als beschränkend, sondern als erläuternd anzusehen.

## Patentansprüche

1. Vorrichtung (1) zur Umformung eines Glashalbzeuges (4) mit einem Ofen (2) mit zumindest einer von einer Wandung (25) begrenzten Ofenkammer (20), in welche das Glashalbzeug (4) einbringbar ist,
**dadurch gekennzeichnet, dass**
in der Wandung (25) zumindest eine Öffnung (5) vorhanden ist, welche mit zumindest einer Düse (50) versehen ist, mit welcher ein Sperrluftstrom erzeugbar ist.

2. Vorrichtung nach Anspruch 1, **dadurch gekennzeichnet, dass** die Düse (50) als Ringdüse ausgebildet ist und/oder
der Ofen (2) eine Mehrzahl von Ofenkammern (20, 21, 22, 23) aufweist, welche dazu eingerichtet sind, vom Glashalbzeug (4) sequentiell durchlaufen zu werden und welche auf unterschiedliche Temperatur bringbar sind.

3. Vorrichtung nach einem der Ansprüche 1 oder 2, weiterhin enthaltend zumindest eine Thermokamera, mit welcher die Temperaturverteilung des Glashalbzeuges (4) bestimmbar ist.

4. Vorrichtung nach einem der Ansprüche 1 bis 3, weiterhin enthaltend zumindest einen Prägestempel (6), mit welchem das Glashalbzeug (4) umformbar ist, insbesondere wobei der Prägestempel in einem Teilvolumen (250) der Ofenkammer (20) angeordnet ist, welches auf eine Temperatur bringbar ist, welche von der Temperatur des verbleibenden Teilvolumens der Ofenkammer (20) abweicht, insbesondere wobei zumindest einem Prägestempel (6) gegenüberliegend ein komplementär geformter Gegenstempel (60) angeordnet ist.

5. Vorrichtung nach einem der Ansprüche 1 bis 4, weiterhin enthaltend zumindest einem Laser (3), welcher dazu eingerichtet ist, einen Laserstrahl (30) zu erzeugen und auf vorgebbare Teilflächen (40) des Glashalbzeuges (4) zu richten, insbesondere weiterhin enthaltend zumindest einen beweglichen Spiegel (35), mit welchem der Laserstrahl (30) auf vorgebbare Teilflächen (40) des Glashalbzeuges (4) gelenkt werden kann und/oder
weiterhin enthaltend eine Transportpalette (7) und/oder eine Biegeform mit drei Kontaktpunkten (71, 72, 73), welche formschlüssig in zugeordnete Aufnahmevorrichtungen (8) der Ofenkammer (20) aufnehmbar sind, insbesondere wobei sich der Schwerpunkt der Transportpalette bzw. der Biegeform innerhalb des durch die Kontaktpunkte aufgespannten Dreiecks befindet, insbesondere wobei die Kontaktpunkte einen V-förmigen Stützkörper aufweisen und die Aufnahmevorrichtungen einen runden Außenquerschnitt aufweisen.

6. Vorrichtung nach Anspruch 5, **dadurch gekennzeichnet, dass** die zumindest eine Aufnahmevorrichtung eine Mehrzahl von Kontaktpunkten aufnimmt.

7. Vorrichtung nach einem der Ansprüche 1 bis 6, **dadurch gekennzeichnet, dass** der Ofen zumindest ein Umluftsystem aufweist, mit welchem die Luft in der Ofenkammer zirkuliert wird und/oder der Ofen zumindest ein Strahlungsblech enthält, welches innerhalb der Ofenkammer angeordnet ist und welches zumindest einen Teil der Wandung bedeckt, welcher auf einer Sichtachse des Glashalbzeuges liegt,
insbesondere wobei das Glashalbzeug in einen Ofen eingebracht wird, welcher zumindest eine Heizeinrichtung enthält, mit welcher das zumindest eine Strahlungsblech auf eine vorgebbare Temperatur bringbar ist,
insbesondere wobei das Glashalbzeug in einen Ofen eingebracht wird, bei welchem das Umluftsystem dazu eingerichtet ist, einen Luftstrom zu erzeugen, welcher zumindest einen Teil eines Strahlungsbleches und/oder einen Teil der Wandung hinterströmt.

8. Vorrichtung nach einem der Ansprüche 1 bis 7, **dadurch gekennzeichnet, dass** das Glashalbzeug mit zumindest einem Positioniersystem innerhalb der Ofenkammer um zumindest eine Achse verschiebbar ist und/oder
dass das Glashalbzeug mit zumindest einem Positioniersystem innerhalb der Ofenkammer um zumindest eine Achse drehbar ist.

9. Verfahren zur Umformung eines Glashalbzeuges (4), bei welchem das Glashalbzeug (4) in einen Ofen (2) mit zumindest einer von einer Wandung (25) begrenzten Ofenkammer eingebracht wird, **dadurch gekennzeichnet, dass** in der Wandung (25) zumindest eine Öffnung (5) vorhanden ist, welche mit zumindest einer Düse (50) versehen ist, mit welcher ein Sperrluftstrom erzeugt wird.

10. Verfahren nach Anspruch 9, **dadurch gekennzeichnet, dass** der Ofen eine Mehrzahl von Ofenkammern aufweist, welche vom Glashalbzeug sequentiell durchlaufen werden und welche sich auf unterschiedlicher Temperatur befinden und/oder die Temperaturverteilung des Glashalbzeuges mit zumindest einer Thermokamera bestimmt wird und/oder das Glashalbzeug mit einem Prägestempel umgeformt wird, insbesondere wobei der Prägestempel in einem Teilvolumen der Ofenkammer angeordnet ist, welches auf eine Temperatur bringbar ist, welche von der Temperatur des verbleibenden Teilvolumens der Ofenkammer abweicht, insbesondere wobei dem zumindest einen Prägestempel gegenüberliegend ein komplementär geformter Gegenstempel angeordnet ist.

11. Verfahren nach einem der Ansprüche 9 oder 10, **dadurch gekennzeichnet, dass** mit zumindest einem Laser, welcher einen Laserstrahl erzeugt, eine vorgebbare Teilfläche des Glashalbzeuges erwärmt wird, insbesondere wobei der Laserstrahl durch zumindest einen beweglichen Spiegel auf vorgebbare Teilflächen des Glashalbzeuges gelenkt wird.

12. Verfahren nach einem der Ansprüche 9 bis 11, **dadurch gekennzeichnet, dass** das Glashalbzeug auf einer Transportpalette und/oder einer Biegeform angeordnet wird, welche auf der dem Glashalbzeug abgewandten Seite drei Kontaktpunkte aufweist, welche formschlüssig in zugeordnete Aufnahmevorrichtungen der Ofenkammer aufgenommen werden, insbesondere wobei sich der Schwerpunkt der Transportpalette bzw. der Biegeform innerhalb des durch die Kontaktpunkte aufgespannten Dreiecks befindet, insbesondere wobei die Kontaktpunkte einen V-förmigen Stützkörper aufweisen und die Aufnahmevorrichtungen einen runden Außenquerschnitt aufweisen, insbesondere wobei die zumindest eine Aufnahmevorrichtung eine Mehrzahl von Kontaktpunkten aufnimmt.

13. Verfahren nach einem der Ansprüche 9 bis 12, **dadurch gekennzeichnet, dass** das Glashalbzeug in einen Ofen eingebracht wird, welcher zumindest ein Umluftsystem aufweist, mit welchem die Luft in der Ofenkammer zirkuliert wird und/oder das Glashalbzeug in einen Ofen eingebracht wird, welcher zumindest ein Strahlungsblech enthält, welches innerhalb der Ofenkammer angeordnet ist und welches zumindest einen Teil der Wandung bedeckt, welcher auf einer Sichtachse des Glashalbzeuges liegt, insbesondere wobei das Glashalbzeug in einen Ofen eingebracht wird, welcher zumindest eine Heizeinrichtung enthält, mit welcher das zumindest eine Strahlungsblech auf eine vorgebbare Temperatur bringbar ist, insbesondere wobei das Glashalbzeug in einen Ofen eingebracht wird, bei welchem das Umluftsystem dazu eingerichtet ist, einen Luftstrom zu erzeugen, welcher zumindest einen Teil eines Strahlungsbleches und/oder einen Teil der Wandung hinterströmt.

14. Verfahren nach einem der Ansprüche 9 bis 13, **dadurch gekennzeichnet, dass** das Glashalbzeug mit zumindest einem Positioniersystem innerhalb der Ofenkammer um zumindest eine Achse verschoben wird.

15. Verfahren nach einem der Ansprüche 9 bis 14, **dadurch gekennzeichnet, dass** das Glashalbzeug mit zumindest einem Positioniersystem innerhalb der Ofenkammer um zumindest eine Achse gedreht wird.

## Claims

1. Device (1) for reforming a glass semifinished product (4,) comprising a furnace (2) having at least one furnace chamber (20) that is delimited by a wall (25) and into which the glass semifinished product (4) can be introduced,
**characterized in that**
at least one opening (5) is provided in the wall (25), the opening being provided with at least one nozzle (50), by means of which a sealing air flow can be generated.

2. Device according to claim 1, **characterized in that** the nozzle (50) is designed as an annular nozzle and/or the furnace (2) has a plurality of furnace chambers (20, 21, 22, 23), which are designed in such a way that the glass semifinished product (4) passes therethrough sequentially and which can be brought to different temperatures.

3. Device according to any one of claims 1 or 2, further comprising at least one thermal camera, by means of which the temperature distribution of the glass semifinished product (4) can be determined.

4. Device according to any one of claims 1 to 3, further comprising at least one embossing die (6), by means of which the glass semifinished product (4) can be reformed, in particular wherein the embossing die is arranged in a partial volume (250) of the furnace chamber (20), which volume can be brought to a temperature that differs from the temperature of the remaining partial volume of the furnace chamber (20), in particular wherein a complementarily shaped counter die (60) is arranged opposite to at least one embossing die (6).

5. Device according to any one of claims 1 to 4, further comprising at least one laser (3), which is designed to generate a laser beam (30) and to direct it onto predeterminable partial surfaces (40) of the glass semifinished product (4), in particular further comprising at least one movable mirror (35), by means of which the laser beam (30) can be directed onto predeterminable partial surfaces (40) of the glass semifinished product and/or further comprising a transport pallet (7) and/or a bending form having three contact points (71, 72, 73), which can be interlockingly received in associated receiving devices (8) of the furnace chamber (20), in particular wherein the center of gravity of the transport pallet or the bending form is located within the triangle spanned by the contact points, in particular wherein the contact points have a V-shaped supporting body and the receiving devices have a round outer cross-section.

6. Device according to claim 5, **characterized in that** the at least one receiving device receives a plurality of contact points.

7. Device according to any one of claims 1 to 6, **characterized in that** the furnace has at least one air circulation system, by means of which the air is circulated in the furnace chamber, and/or the furnace contains at least one radiation plate which is arranged within the furnace chamber and which covers at least a portion of the wall, which portion is located on a visual axis of the glass semifinished product, in particular wherein the glass semi-finished product is introduced into a furnace comprising at least one heating apparatus, by means of which the at least one radiation plate can be brought to a predeterminable temperature, in particular wherein the glass semifinished product is introduced into a furnace, the air circulation system of which is designed to generate an air flow that flows behind at least a portion of a radiation plate and/or a portion of the wall.

8. Device according to any one of claims 1 to 7, **characterized in that** the glass semifinished product is shiftable by means of at least one positioning system within the furnace chamber by at least one axis and/or in that the glass semifinished product is rotatable by means of at least one positioning system within the furnace chamber about at least one axis.

9. Method for reforming a glass semifinished product (4), in which the glass semifinished product (4) is introduced into a furnace (2) comprising at least one furnace chamber that is delimited by a wall (25), **characterized in that** at least one opening (5) is provided in the wall (25), the opening being provided with at least one nozzle (50), by means of which a sealing air flow is generated.

10. Method according to claim 9, **characterized in that** the furnace comprises a plurality of furnace chambers through which the glass semifinished product passes sequentially and which are at different temperatures and/or the temperature distribution of the glass semifinished product is determined by means of at least one thermal camera and/or the glass semifinished product is reformed by means of an embossing die, in particular wherein the embossing die is arranged in a partial volume of the furnace chamber, which volume can be brought to a temperature that differs from the temperature of the remaining partial volume of the furnace chamber, in particular wherein a complementarily shaped counter die is arranged opposite to the at least one embossing die.

11. Method according to any one of claims 9 or 10, **characterized in that** a predeterminable partial surface of the glass semifinished product is heated by means of at least one laser that generates a laser beam, in particular wherein the laser beam is directed at predeterminable partial surfaces of the glass semifinished product by means of at least one movable mirror.

12. Method according to any one of claims 9 to 11, **characterized in that** the glass semifinished product is arranged on a transport pallet and/or a bending form which, on the side facing away from the glass semifinished product, has three contact points that are interlockingly received in associated receiving devices of the furnace chamber, in particular wherein the center of gravity of the transport pallet or the bending form is located within the triangle spanned by the contact points, in particular wherein the contact points have a V-shaped supporting body and the receiving devices have a round outer cross-section, in particular wherein the at least one receiving device receives a plurality of contact points.

13. Method according to any one of claims 9 to 12, **characterized in that** the glass semifinished product is introduced into a furnace comprising at least one air circulation system, by means of which the air in the furnace chamber is circulated and/or the glass semifinished product is introduced into a furnace which contains at least one radiation plate that is arranged within the furnace chamber and that covers at least a portion of the wall, which portion lies on a visual axis of the glass semifinished product, in particular wherein the glass semi-finished product is introduced into a furnace that contains at least one heating device, by means of which the at least one radiation plate can be brought to a predeterminable temperature, in particular wherein the glass semifinished product is introduced into a furnace, the air circulation system of which is designed to generate an air flow which flows behind at least a portion of a radiation plate and/or a portion of the wall.

14. Method according to any one of claims 9 to 13, **characterized in that** the glass semifinished product is shifted by means of at least one positioning system within the furnace chamber by at least one axis.

15. Method according to any one of claims 9 to 14, **characterized in that** the glass semifinished product is rotated by means of at least one positioning system within the furnace chamber about at least one axis.

## Revendications

1. Dispositif (1) de formage d'un produit semi-fini en verre (4), comprenant un four (2) avec au moins une chambre de four (20) délimitée par une paroi (25), dans laquelle le produit semi-fini en verre (4) peut être introduit,
**caractérisé en ce que**
dans la paroi (25) se trouve au moins une ouverture (5) qui est pourvue d'au moins une buse (50) permettant de générer un flux d'air de barrage.

2. Dispositif selon la revendication 1, **caractérisé en ce que** la buse (50) est conçue comme une buse annulaire et/ou le four (2) présente une pluralité de chambres de four (20, 21, 22, 23) qui sont conçues pour être traversées séquentiellement par le produit semi-fini en verre (4) et qui peuvent être amenées à des températures différentes.

3. Dispositif selon l'une des revendications 1 ou 2, comprenant en outre au moins une caméra thermique permettant de déterminer la distribution des températures du produit semi-fini en verre (4).

4. Dispositif selon l'une des revendications 1 à 3, comprenant en outre au moins un poinçon d'estampage (6) permettant de former le produit semi-fini en verre (4), en particulier le poinçon d'estampage étant disposé dans un volume partiel (250) de la chambre de four (20) qui peut être amené à une température qui s'écarte de la température du volume partiel restant de la chambre de four (20), en particulier un contre-poinçon (60) de forme complémentaire étant disposé en face d'au moins un poinçon d'estampage (6).

5. Dispositif selon l'une des revendications 1 à 4, comprenant en outre au moins un laser (3) conçu pour générer un faisceau laser (30) et pour le diriger sur des surfaces partielles (40) prédéfinissables du produit semi-fini en verre (4), en particulier comprenant en outre au moins un miroir mobile (35) permettant de diriger le faisceau laser (30) sur des surfaces partielles (40) prédéfinissables du produit semi-fini en verre (4), et/ou comprenant en outre une palette de transport (7) et/ou un moule de cintrage avec trois points de contact (71, 72, 73), qui peuvent être reçus par complémentarité de forme dans des dispositifs de réception (8) associés de la chambre de four (20), en particulier le centre de gravité de la palette de transport ou du moule de cintrage se trouvant à l'intérieur du triangle défini par les points de contact, en particulier les points de contact présentant un corps de soutien en forme de V, et les dispositifs de réception présentant une section transversale extérieure ronde.

6. Dispositif selon la revendication 5, **caractérisé en ce que** ledit au moins un dispositif de réception reçoit une pluralité de points de contact.

7. Dispositif selon l'une des revendications 1 à 6, **caractérisé en ce que** le four comprend au moins un système de circulation d'air permettant de faire circuler l'air dans la chambre de four, et/ou le four comprend au moins une tôle de rayonnement disposée à l'intérieur de la chambre de four et recouvrant au moins une partie de la paroi qui se situe sur un axe de vision du produit semi-fini en verre, en particulier le produit semi-fini en verre étant introduit dans un four qui comprend au moins une unité de chauffage permettant d'amener ladite au moins une tôle de rayonnement à une température prédéfinissable, en particulier le produit semi-fini en verre étant introduit dans un four dans lequel le système de circulation d'air est conçu pour générer un flux d'air qui passe derrière au moins une partie d'une tôle de rayonnement et/ou une partie de la paroi.

8. Dispositif selon l'une des revendications 1 à 7, **caractérisé en ce que** le produit semi-fini en verre peut être déplacé autour d'au moins un axe à l'intérieur de la chambre de four au moyen d'au moins un système de positionnement, et/ou
**en ce que** le produit semi-fini en verre peut être tourné autour d'au moins un axe à l'intérieur de la chambre de four au moyen d'au moins un système de positionnement.

9. Procédé de formage d'un produit semi-fini en verre (4), dans lequel le produit semi-fini en verre (4) est introduit dans un four (2) avec au moins une chambre de four délimitée par une paroi (25), **caractérisé en ce que** dans la paroi (25) se trouve au moins une ouverture (5) qui est pourvue d'au moins une buse (50) permettant de générer un flux d'air de barrage.

10. Procédé selon la revendication 9, **caractérisé en ce que** le four présente une pluralité de chambres de four qui sont traversées séquentiellement par le produit semi-fini en verre et qui se situent à des températures différentes, et/ou la distribution des températures du produit semi-fini en verre est déterminée avec au moins une caméra thermique, et/ou le produit semi-fini en verre est formé avec un poinçon d'estampage, en particulier le poinçon d'estampage étant disposé dans un volume partiel de la chambre de four qui peut être amené à une température qui s'écarte de la température du volume partiel restant de la chambre de four, en particulier un contre-poinçon de forme complémentaire étant disposé en face dudit au moins un poinçon d'estampage.

11. Procédé selon l'une des revendications 9 ou 10, **caractérisé en ce qu'**une surface partielle prédéfinissable du produit semi-fini en verre est chauffée avec au moins un laser qui produit un faisceau laser, en particulier le faisceau laser étant dirigé sur des surfaces partielles prédéfinissables du produit semi-fini en verre par au moins un miroir mobile.

12. Procédé selon l'une des revendications 9 à 11, **caractérisé en ce que** le produit semi-fini en verre est disposé sur une palette de transport et/ou sur un moule de cintrage qui présente, sur le côté détourné du produit semi-fini en verre, trois points de contact qui sont reçus par complémentarité de forme dans des dispositifs de réception associés de la chambre de four, en particulier le centre de gravité de la palette de transport ou du moule de cintrage se trouvant à l'intérieur du triangle défini par les points de contact, en particulier les points de contact présentant un corps de soutien en forme de V, et les dispositifs de réception présentant une section transversale extérieure ronde, en particulier ledit au moins un dispositif de réception recevant une pluralité de points de contact.

13. Procédé selon l'une des revendications 9 à 12, **caractérisé en ce que** le produit semi-fini en verre est introduit dans un four qui comprend au moins un système de circulation d'air permettant de faire circuler l'air dans la chambre de four, et/ou le produit semi-fini en verre est introduit dans un four qui comprend au moins une tôle de rayonnement disposée à l'intérieur de la chambre de four et recouvrant au moins une partie de la paroi située sur un axe de vision du produit semi-fini en verre, en particulier, le produit semi-fini en verre étant introduit dans un four qui comprend au moins une unité de chauffage permettant d'amener ladite au moins une tôle de rayonnement à une température prédéterminée, en particulier, le produit semi-fini en verre étant introduit dans un four dans lequel le système de circulation d'air est conçu pour générer un flux d'air qui passe derrière au moins une partie d'une tôle de rayonnement et/ou une partie de la paroi.

14. Procédé selon l'une des revendications 9 à 13, **caractérisé en ce que** le produit semi-fini en verre est déplacé autour d'au moins un axe à l'intérieur de la chambre de four au moyen d'au moins un système de positionnement.

15. Procédé selon l'une des revendications 9 à 14, **caractérisé en ce que** le produit semi-fini en verre est tourné autour d'au moins un axe à l'intérieur de la chambre de four au moyen d'au moins un système de positionnement.
